# EUROPEAN PATENT SPECIFICATION

(11) **EP 2 051 439 B1**
(45) Date of publication and mention of the grant of the patent: **26.01.2011**
(21) Application number: 07020524.0
(22) Date of filing: 19.10.2007
(51) Int. Cl.: H04L 12/24, H04L 12/56

(54) **A method for managing data flows in a mobile telecommunications system**
Verfahren zum Verwalten von Datenströmen in einem mobilen Telekommunikationssystem
Procédé de gestion des flux des données dans un système de télécommunication mobile

(43) Date of publication of application: 22.04.2009
(73) Proprietor: SIEMENS AKTIENGESELLSCHAFT, 80333 München (DE)
(72) Inventor: Görg, Carmelita, Prof., 28357 Bremen (DE); Kuladinithi, Koojana, 28357 Bremen (DE); Pittmann, Frank, 12099 Berlin (DE); Udugama, Asanga, 28357 Bremen (DE)

(56) References cited:
- WO-A-00/13436
- US-A1- 2006 193 295
- US-A1- 2007 061 433

## Description

The invention relates to a method for managing data flows in a mobile telecommunications system as well as a method for data transmission in a mobile telecommunications system and a corresponding mobile telecommunications system.

The Patent Document US 2007/0061433 A1 discloses a Traffic Manager being responsible for determining whether there are sufficient resources available for a newly requested service and if so, to dynamically allocate those management resources (for example "queues") to ensure that the service guarantees can be met. In contrast, the invention relates to a method for managing data flows.

In newly developed mobile telecommunications system, especially in 3GPP (3^{rd} Generation Partnership Project) mobile networks, an increasing number of heterogeneous access technologies are supported by those network structures. Those access technologies particularly comprise UMTS and/or GSM access networks (UTMS = Universal Mobile Telecommunications System; GSM = Global System for Mobile Communication) as well as new 3GPP access technologies like SAE/LTE radio access networks (SAE = System Architecture Evolution/LTE = Long Term Evolution). The user devices in mobile networks more and more support the possibility to access different radio access technologies, e.g. 3GPP technologies and also non 3GPP technologies like WLAN. Some user devices also enable a simultaneous access in parallel to different access networks to connect to the core network of the mobile telecommunications system.

The Patent Document US 2006/0193295 A1 discloses such a user device.

Hence, there is a need to efficiently use different access technologies and to provide seamless continuity of connectivity and services between those access technologies.

There are solutions in the prior art enabling the redirection of data flows transmitted via one access network to another access network, like Mobile IP. Nevertheless, the prior art solutions do not support a management of data flows on a flow-to-flow basis in dependence on certain criteria implemented in the network. Particularly, there is no solution for a scenario where a user of a user device maintaining a video data flow and a voice data flow via a UMTS access network can only change the video data flow to a WLAN access network when moving into the range of a WLAN hot spot. In such a scenario, the video data stream would be changed to the WLAN network whereas the voice stream would not be affected at all. Furthermore, when loosing the WLAN coverage, the network should be adapted to redirect the video data flow back to the UMTS access network.

According to the foregoing, it is an object of the invention to provide a method for managing data flows in a mobile telecommunications system enabling a mechanism to automatically change the paths of data flows to and from and/or within one and more access networks in dependence on predefined criteria implemented in the network.

The method according to the invention manages data flows in a mobile telecommunications system having a plurality of network nodes, wherein a data flow from and/or to a user device can be transmitted between a core network and the user device via different data links comprising links between the core network and one or more access networks and/or links within one and more access networks. Particularly, those access networks are mobile access networks, and the user equipments are preferably, but not limited to, mobile devices like mobile phones, laptops and the like.

According to the invention, data flow information referring to rules concerning the data links to be used for specific data flows is provided in at least one flow management entity assigned to a network node through which data flows are transmitted. This data flow information is verified by a flow decision entity based on one or more policies whereupon a verification result comprising confirmed and/or rejected rules and/or confirmed and/or rejected modifications of rules is returned to the at least one flow management entity. Based on the verification result, data flow filters are established by the at least one flow management entity, the data flow filters determining the data to be used for a data flow passing through the network node to which the at least one flow management entity is assigned.

According to the invention, two new entities are introduced in a mobile telecommunications system, namely a flow management entity and a flow decision entity. The flow management entity enables the implementation of rules on a flow-to-flow basis whereas the flow decision entity provides a mechanism to confirm or reject rules based on policies. The invention thus enables an efficient mechanism to implement a change of data links to and from and within access networks by using rules and policies in the network. Therefore, a new flow-based management system is provided by the method according to the invention.

In a preferred embodiment, the at least one flow management entity and the flow decision entity communicate via a predefined interface which is called the F1 reference point in the detailed description.

In another embodiment of the invention, the interworking between the at least one flow management entity and the flow decision entity is such that the flow management entity transmits requests for adding and/or modifying and/or deleting rules based on the data flow information to the flow decision entity. The flow decision entity verifies those requests and returns confirmations and/or refusals with respect to those requests to the at least one flow management entity, preferably via the above mentioned predefined interface.

In another embodiment of the invention, default rules are used for establishing a data flow filter for a data flow to be transmitted in case that no other rule applies for the data flow.

The rules used according to the invention may depend on various quantities. Particularly, the rules may depend on the availability and/or load of the access networks and/or on the data transmission fees or speeds of the access networks. Furthermore, the rules may depend on the content of the data flow to be transmitted, particularly whether voice data and/or video data and/or multimedia data are transmitted in the data flow. This enables a fine adjustment of the data flow with respect to its content. In a preferred embodiment, the rules include instructions to redirect a data flow via another access network when predetermined conditions are met.

The policies provided for verifying the rules may be input by various entities. Preferably, those policies are provided in the flow decision entity by at least one service provider, particularly a mobile access network provider, and/or at least one mobile network provider and/or at least one user of a user device. Hence, different requirements from different entities may be taken into account when establishing appropriate data flow filters.

In another preferred embodiment, the data flow information is provided in the at least one flow management entity by at least one service provider, particularly a mobile access network provider and/or at least one network entity and/or at least one mobile network operator and/or at least one user of a user device. Hence, rules from different units in the network may be provided in the flow management entity.

Preferably, at least one flow decision entity located in the core network is used in the method of the invention. This entity communicates with one or more flow management entities.

Preferred locations for the flow management entity in the network is a gateway of an access network providing access to the core network and/or a mobility anchor providing mobility functionality to enable a user device to seamlessly change the access network. A preferred location for the flow decision entity is a mobility anchor. However, the flow decision entity may also be a separate entity in the core network not belonging to another entity.

The access networks in the mobile telecommunications system in which the method of the invention is implemented are particularly one or more 3GPP access networks, e.g. at least one UMTS access network and/or at least one GSM access network and/or at least one SAE/LTE access network. However, also non 3GPP access networks may be used, particularly at least one WLAN access network.

The aforementioned method for managing data flows is preferably implemented in a method for transmitting data flows in a mobile telecommunications system. In such a transmission method, data flows which are transmitted via at least one network node to which a flow management entity is assigned are forwarded according to the data flow filters established by the flow management entity.

Besides the above method, the invention also relates to a mobile telecommunications system having a plurality of network nodes, wherein a data flow from and/or to a user device can be transmitted between a core network and the user device via different data links comprising links between the core network and one or more access networks and/or links within one or more access networks, wherein the access networks are preferably mobile access networks. This mobile telecommunications system comprises the following components:
- at least one flow management entity assigned to a network node through which data flows are transmitted, the at least one flow management entity storing data flow information referring to rules concerning the data links to be used for specific data flows;
- a flow decision entity for verifying the data flow information stored in the at least one flow management entity based on one or more policies and for returning a verification result comprising confirmed and/or rejected rules and/or confirmed and/or rejected modifications of rules to the at least one flow management entity.

In such a telecommunications system, the at least one flow management entity has means to establish data flow filters based on the verification result, said data flow filters determining the data link to be used for a data flow passing through the network node to which the at least one flow management entity is assigned.

Preferably, the above mobile telecommunications system is adapted to perform any of the above described variants of the method according to the invention.

Embodiments of the invention will now be described in detail with respect to the accompanying drawings, wherein:
- Fig. 1: is a schematic view of a first embodiment of a mobile telecommunications system implementing the method according to the invention;
- Fig. 2: is a schematic illustration of the interaction between a flow management entity and a flow decision entity according to the invention; and
- Fig. 3: is a schematic view of another embodiment of a mobile telecommunications system implementing the method according to the invention.

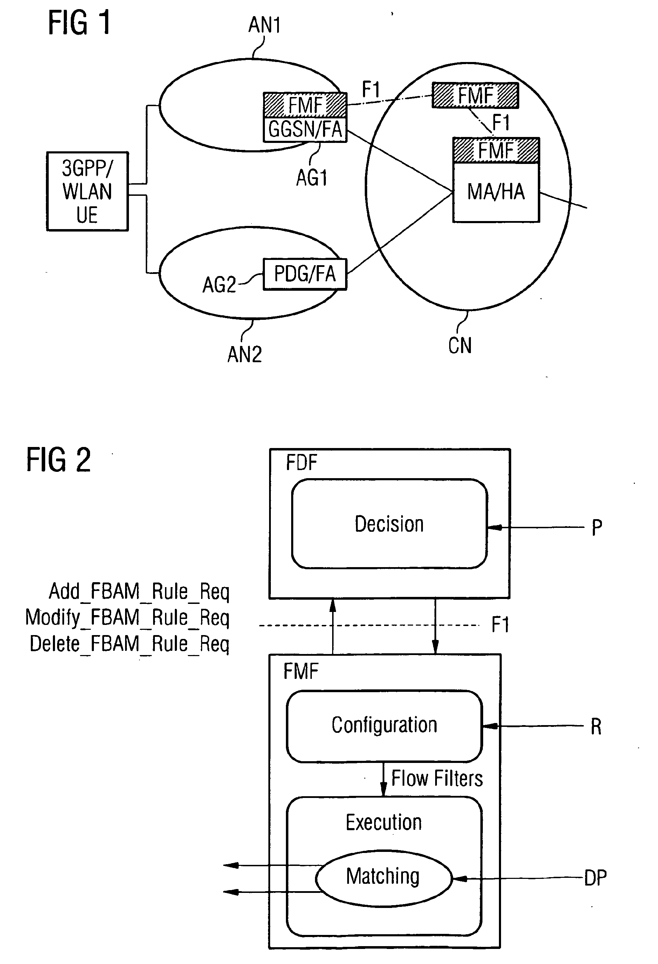

Fig. 1 shows a mobile telecommunications system comprising a common core domain network CN which can be accessed by different heterogeneous mobile access networks. In Fig. 1, a first mobile access network AN1 and a second mobile access network AN2 are shown. The mobile access network AN1 is a 3GPP network in the form of a GPRS packet domain network (GPRS = General Packet Radio Service). This network has an access gateway in the form of a GGSN (GGSN = Gateway GPRS Support Node). The second mobile access network AN2 is a non 3GPP WLAN access network (WLAN = Wireless Local Area Network) having an access gateway AG2 in the form of a packet data gateway PDG. Both gateways AG1 and AG2 enable a data transmission between the respective access networks and the common core network CN. Fig. 1 further shows a user device in the form of an user equipment UE, e.g. a mobile phone, having 3GPP and WLAN functionality, i.e. the user equipment UE has two interfaces so that it can attach simultaneously to both access networks AN1 and AN2. The network of Fig. 1 includes a mobility mechanism based on Mobile IP version 4 with corresponding locations of home agents HA and foreign agents FA for the user equipment UE. In Fig. 1, the function of the home agent HA is implemented in a so-called mobility anchor MA in the core network CN. The user equipment UE is attached to both foreign networks AN1 and AN2 wherein the GGSN of the 3GPP network AN1 forms one foreign agent FA and the packet data gateway of the WLAN network AN2 forms another foreign agent FA. The mobility mechanism of Mobile IPv4 is well known in the art and will not be described here in detail.

According to the invention, it is possible to implement flow-based rules enabling the forwarding of data flows to the access network AN1 or AN2 according to a certain criteria. To do so, a flow decision entity in the form of a flow-based access management decision function FDF and two flow management entities in the form of flow management functions FMF are implemented in the network of Fig. 1. The flow-based access management decision function is located in the common core network CN and is shown as a separate entity in Fig. 1. However, this entity needs not be separated from the mobility anchor MA but may form a part of this anchor. In the flow-based access management decision function FDF several policies are stored, said policies being used in order to verify corresponding rules for forwarding data flows. The decision function FDF communicates via two interfaces in the form of reference points F1 with an FMF integrated in the access gateway AG1 of the GPRS access network AN1 and with an FMF integrated in the mobility anchor MA. In those FMFs, the corresponding rules for forwarding data flows are provided and corresponding requests for verifying those rules are transmitted to the common FDF. The FDF verifies those rules based on the stored policies and confirms or refuses the rules by sending messages back to the FMFs. A detailed description of the interworking between the FMFs and the FDF will be given with respect to Fig. 2.

Due to the use of the new components FDF, FMF and the reference point F1, a flow-based mechanism for forwarding data packets via different links from and to the access networks and/or within the access networks is established. For forwarding data packets arriving at the mobility anchor MA and destined to the user equipment UE, well-known filters defined for Mobile IP may be used. Those filters may be based on IP source/destination addresses and port numbers. This mechanism is sufficient when using e.g. a streaming protocol like RTP (RTP = Real Time Protocol) which separates individual flows by means of different port numbers.

In the GPRS access network AN1, flows may be separated by using the well-known mechanism of TFTs (TFT = Traffic Flow Template). This mechanism is used to direct packets addressed to the same PDP address (PDP = Packet Data Protocol) to different secondary PDF contexts. E.g., when a user having a user equipment being attached to the access network AN1 starts a multimedia communication, the multimedia application may activate a secondary PDP context suitable for video streaming. When the voice and video packets arrive at the GGSN of the access network AN1, all packets have the same destination IP address. The TFT-mechanism allows other aspects, particularly the source address, the port number, the flow label and so on, to be used to assign the arriving packets to the correct PDP contexts and hence to the correct QoS (QoS = Quality of Service). Particularly, the source address and the source port number may be used in the described scenario to differentiate between different flows. Of course, appropriate software has to be available at the user equipment UE to perform the above described flow management actions in the opposite direction.

In case that the necessity arises for an operation and maintenance centre of the telecommunications system to redirect a flow via the WLAN network AN2 to the GPRS network AN1, the operation and maintenance centre has to configure the corresponding rules in the flow management function FMF of the mobility anchor MA which needs an authorization for those rules at the decision function FDF via the reference point F1 before forwarding all incoming packets of the flow via the GPRS network AN1.

Fig. 2 is a schematic illustration showing the interaction between a flow management function FMF and a flow-based access management decision function FDF. Flow-based access management rules designated as R are input in the flow management function FMF. Those rules can be provided by different entities, e.g. by users (if allowed to do so) of user equipments, other network functions, access network service providers, mobile network operators, particularly operation and maintenance centres. The rules input are verified by the flow-based access management decision function FDF. To do so, corresponding requests are transmitted from the FMF to the FDF via the F1 interface. Those requests comprise a request for adding a new rule Add_FBAM_rule_req, a request for modifying existing rules Modify_FBAM_rule_req and requests for deleting existing rules Delete_FBAM_rule_req. Those requests are handled in the FDF which decides whether those requests are allowed or not by using corresponding policies P. Those policies may be provided by users (if allowed to do so) of user equipments, access network service providers, mobile network operators, particularly operation and maintenance centres.

After verifying the rules, a corresponding accept or reject message to the respective request is transmitted via the reference point F1 to the FMF. As a consequence, based on confirmed new rules or modifications or deletions of rules, appropriate flow filters are configured in the flow management function. Thereafter, those filters are executed during the data transmission of data packets DP arriving in the FMF. Particularly, it is checked whether information in the data packets matches with criteria in the flow filters. As a consequence, data packets may be delivered via different interfaces I1 or I2 to access networks or within an access network. Hence, based on the outcome of the matching executed in the FMF, the corresponding forwarding action of the applicable flow-based access management rule is performed and the appropriate interface is selected.

In the following, a more detailed description of the new components FDF, FMF and F1 introduced by the invention is given. The flow-based access management decision function FDF is usually part of the core network and communicates with the flow management function FMF via an interface called F1 reference point. The FDF accepts or rejects at the F1 reference point requests for flow-based access management rules R originated by the FMF. A decision engine implemented in the FDF incorporates in the decision making process corresponding policies P from other entities, e.g. users, service providers or mobile network operators. What kind of policies and how they are provided is out of the scope of this invention. One possible realization of policies being applicable to a user is described in the prior art for WLAN access authorization wherein processes are defined for 3GPP AAA server defining what access rules/policy should be applied to a user. This mechanism could be extended for providing flow-based access management policies.

Examples of flow-based access management policies are:
- rules input in the FMF from an operation and maintenance centre always have highest priority;
- do not accept any rule input by a so-called silver-class user having lower priority than other users;
- a user is allowed to input rules if the rules do not violate rules or policies input by other entities, e.g. a user is allowed to use a WLAN access for those flow management actions which do not violate rules originating from a network operator or an operation and maintenance centre.

The flow management function FMF communicates with the flow-based access management decision function FDF via F1 reference points. The FMF receives flow-based access management rules R provided by users, other network functions, service providers, mobile network operators or operation and maintenance centre. New rules can be added to a database hosted by the FMF and existing rules can be modified or deleted. In a preferred embodiment, so-called default rules are applied if no other rule is applicable. The mechanism and the format of how the rules are provided as well as the mapping to distinct flow filters are out of the scope of this invention. Several realizations for enabling such a filtering are defined in the prior art. In those realizations, explicit flow filters (addressing e.g. distinct IP header fields like addresses and port numbers or the flow label) are piggybacked on Mobile IP signalling. Other realizations are possible to be used in the invention, e.g. providing flow-based access management rules during WLAN access authorization or by using an independent signalling protocol or by using a more abstract notation for flow-based access management rules.

Examples of flow-based access management rules are as follows:
- a rule input by an operation and maintenance centre may be to redirect all data flows to another access network, e.g. because the former access network has to be completely maintained;
- a rule input by a user may be to redirect a specific flow from an expensive UMTS interface to a WLAN interface which is cheaper and has become available due to the movement of the user equipment;
- a rule input by another network function (e.g. located in the core network) may be to redirect some flows to another, in parallel available radio access network, e.g. because of overload conditions;
- another rule which may be input by a network function may be to force a redirection of a video data flow to a WLAN access after the network function has detected the attachment of the user equipment to the WLAN access.

As described above, the FMF applies flow-based access management rules by evaluating received data packets (e.g. IP packets) against flow filters. When a packet matches a filter, the packet matching process for this packet is completed, and the corresponding forwarding action of this flow-based access management rule is applied, e.g. with the consequence that an appropriate interface to an access network is selected or that a secondary PDP context is used.

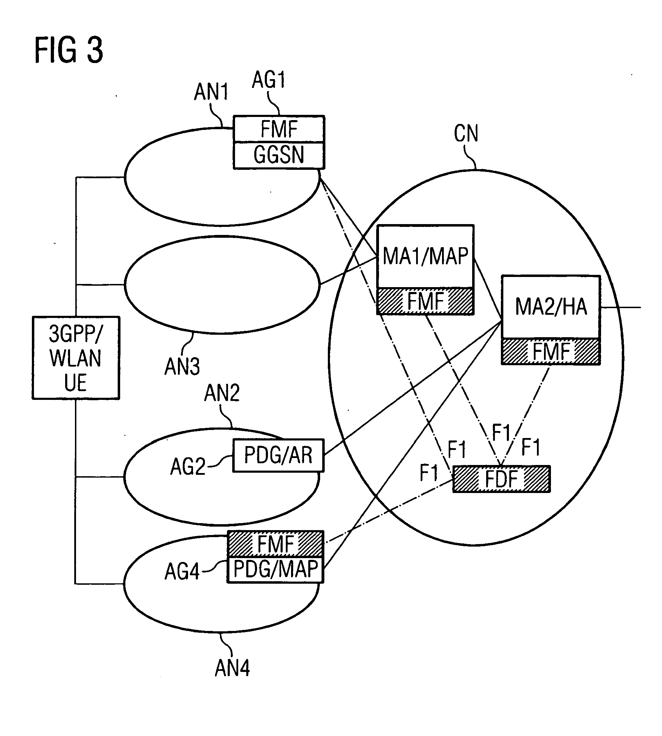

The flow management function FMF may be incorporated in different physical components and known network functions. In a Mobile IP oriented environment, the FMF may be implemented in the home agent or a mobility anchor when using Mobile IPv4. When using Mobile IPv6, the FMF may be implemented in the home agent or a common mobility anchor or a mobility anchor point mobility anchor point. Examples of a common mobility anchor and mobility anchor points are shown in Fig. 3 described later on. In a 3GPP oriented environment, a FMF may be implemented in the GGSN wherein each individual PDP context (i.e. each primary and all secondary PDP contexts) could be seen in the context of the invention as parallel, simultaneously used GPRS access links having individual characteristics, like QoS specifications, and being managed by means of TFTs.

The F1 reference point is located between the flow management functions FMF and the flow-based management decision function FDF. The F1 reference point enables the authorization of flow-based access management rules requested by users or other network functions or service providers or mobile network operators or operation and maintenance centres based on policies from users or access network service providers or mobile network operators or operation and maintenance centres.

The F1 reference point supports the following functions between the FDF and FMF:
- initialization and maintenance of F1 connection;
- request for adding a new flow-based management rule by using the above described message Add_FMBA_rule_req;
- request for modifying an already existing flow-based access management rule by using the above defined F1 messages Modify_FBAM_rule_req;
- request for deleting an existing flow-based access management rule by using the above defined F1 messages Delete_FBAM_rule_req;
- transmit acceptance and refusal messages for the above requests.

Fig. 3 is a schematic view of another embodiment of a mobile telecommunications system in which the method according to the invention may be implemented. Fig. 3 shows a scenario wherein, additionally to the GPRS packet domain network AN1 and the WLAN access network AN2, two further mobile access networks are used in order to connect to a core network CN. Those additional mobile access networks are networks AN3 and AN4. The network AN3 is a SAE/LTE radio access domain network (SAE = System Architecture Evolution; LTE = Long Term Evolution) which are newly developed 3GPP access networks. The network AN4 is another WLAN access network implementing a Mobile IPv6 mechanism wherein the mobile access point MAP is implemented in the packet data gateway PDG incorporated in the access gateway AG4. This packet data gateway also includes a flow management function FMF. Contrary to that, the access gateway AG2 of the WLAN network AN2 is a packet data gateway only having the function of an access router AR.

Similar to the user equipment shown in Fig. 1, the user equipment UE shown in Fig. 3 has two interfaces to enable a simultaneous connection through 3GPP networks, i.e. network AN1 or network AN3, and through non 3GPP networks, i.e. network AN2 and/or AN4. In the scenario shown in Fig. 3, only access to one 3GPP network at a time but an additional simultaneous access to all other, in parallel available WLAN access networks is allowed to be performed by the UE.

Besides one flow-based management decision function FDF, the core network CN also includes mobility anchors MA1 and MA2 both implementing a corresponding flow management function FMF. The mobility anchor MA1 is a 3GPP mobility anchor having the functionality of a mobile access point MAP according to Mobile IPv6 and providing seamless connectivity when a user equipment changes between the 3GPP networks AN1 and AN3. The other mobility anchor MA2 is a so-called common mobility anchor having the functionality of a home agent HA according to Mobile IPv6. This common mobility anchor provides mobility between the WLAN networks AN2 and AN4. Due to the use of mobility anchors MA1 and MA2, mobility is provided between all access networks AN1 to AN4.

According to the invention, the new components FMF and FDF are integrated in the network of Fig. 3. Particularly, each mobility anchor MA1 and MA2 includes a flow management function FMF defining appropriate flow filters. Furthermore, a flow management function FMF is integrated in the access gateway AG1 of the 3GPP network AN1 and in the access gateway AG4 of the access WLAN network AN4. All those FMFs communicate with the common flow-based management decision function FDF in the core network CN via the above defined F1 reference points. The flow-based management decision function FDF located in the common core network CN is not necessarily separated from the mobility anchors but may also form a part of one of those mobility anchors.

During operation of the network of Fig. 3, incoming IP packets at the common mobility anchor MA2 destined to the user equipment UE will be directed to the configured 3GPP and non 3GPP access networks as the filters for Mobile IP at the common mobility anchor MA2 define. Those filters may be based on IP source/destination addresses and port numbers when using a streaming protocol like RTP which separates individual flows by means of different port numbers. Also the parameter Flow Label may be used to distinguish data flows. In case that several flows are directed to an active 3GPP access network AN1 or AN3, those flows could be separated by using the above described TFTs. Packets destined to non 3GPP access networks are directed to the configured WLAN access networks AN2 or AN4 as the filters for Mobile IP at the common mobility anchor MA2 define. The selection of the first WLAN network AN2 is finally done in the common mobility anchor MA2 whereas the mobile access point MAP in the access gateway AG4 of the second WLAN network AN4 includes some further structure within this network so that an additional configuration of filters for Mobile IP in this gateway may result in the final selection of the access routers in this WLAN network. From the perspective of the user equipment UE, flows will be terminated at the UE arriving via the active 3GPP access network and via the WLAN access networks AN2 and AN4.

In an extension of the scenario shown in Fig. 3, an independent WLAN access service provider for the second WLAN access network AN4 which has a service level agreement with the 3GPP mobile network operator may have the ability to manage the flows within its WLAN network by means of the FMF hosted by the PDG/MAP in access gateway AG4. To do so, an interface to this FMF is needed which is not within the scope of this invention.

The invention as described above has several benefits and advantages. Particularly, the invention enables a network controlled flow management spanning all (mobile) access networks of an operator, thus providing a network service for efficient usage of (mobile) access network resources. This efficiency is particularly improved by using suitable policies for implementing rules to configure flow filters. The method according to the invention may support seamless continuity of connectivity and services by using realizations like GPRS/TFTs or filters for Mobile IP. According to the invention, innovative varieties of media services are possible because using the flow management of the invention supports service provisioning via simultaneous, parallel network attachments. Particularly, the service provisioning supported by the policy based flow management can include user's preferences, making these services attractive for new users. A mobile network operator may increase its revenue per user by providing seamless connectivity and service continuity over all mobile access networks. A mobile network operator may decrease its operational expenditure by providing a flow-based access management architecture as a solution applicable for all mobile access networks.

## Claims

1. A method for managing data flows in a mobile telecommunications system having a plurality of network nodes, wherein a dataflow from and/or to a user device (UE) can be transmitted between a core network (CN) and the user device (UE) via different data links comprising links between the core network (CN) and one or more access networks (AN1, AN2, AN3, AN4) and/or links within one or more access networks (AN1, AN2, AN3, AN4), the method comprising the following steps:
- data flow information referring to rules (R) concerning the data links to be used for specific data flows is provided in at least one flow management entity (FMF) assigned to a network node through which data flows are transmitted;
- the data flow information is verified by a flow decision entity (FDF) based on one or more policies (P) whereupon a verification result comprising confirmed and/or rejected rules (R) and/or confirmed and/or rejected modifications of rules (R) is returned to the at least one flow management entity (FMF);
- based on the verification result, data flow filters are established by the at least one flow management entity (FMF), said data flow filters determining the data link to be used for a data flow passing through the network node to which the at least one flow management entity (FMF) is assigned.

2. The method according to claim 1, wherein the at least one flow management entity (FMF) and the flow decision entity (FDF) communicate via a predefined interface (F1).

3. The method according to claim 1 or 2, wherein the at least one flow management entity (FMF) transmits requests for adding and/or modifying and/or deleting rules (R) based on the data flow information to the flow decision entity (FDF), whereupon the flow decision entity (FDF) verifies those requests and returns confirmations and/or refusals with respect to those requests to the at least one flow management entity (FMF).

4. The method according to one of the preceding claims, wherein default rules are used for establishing a data flow filter for a data flow to be transmitted in case that no other rules apply for the data flow.

5. The method according to one of the preceding claims wherein the rules (R) are dependent on the availability and/or load of the access networks (AN1, AN2, AN3, AN4) and/or on the data transmission fees or speeds of the access networks (AN1, AN2, AN3, AN4).

6. The method according to one of the preceding claims, wherein the rules (R) are dependent on the content of the data flow to be transmitted, particularly whether voice data and/or video data and/or multimedia data are transmitted in the data flow.

7. The method according to one of the preceding claims, wherein the rules (R) include instructions to redirect a data flow via another access network (AN1, AN2, AN3, AN4) when predetermined conditions are met.

8. The method according to one of the preceding claims, wherein the policies (P) are provided in the flow decision entity (FDF) by at least one service provider, particularly a mobile access network provider and/or at least one mobile network operator and/or at least one user of a user device (UE).

9. The method according to one of the preceding claims, wherein the data flow information is provided in the at least one flow management entity (FMF) by at least one service provider, particularly a mobile access network provider and/or at least one network entity and/or at least one mobile network operator and/or at least one user of a user device (UE).

10. The method according to one of the preceding claims, wherein the method is performed by using at least one flow decision entity (FDF) which is preferably located in the core network (CN) and communicates with one or more flow management entities (FMF).

11. The method according to one of the preceding claims wherein the at least one flow management entity (FMF) is assigned to a mobility anchor (MA, MA1, MA2) providing mobility functionality and/or to a gateway (AG1, AG2, AG3, AG4) of an access network (AN1, AN2, AN3, AN4) providing access to the core network (CN).

12. The method according to one of the preceding claims, wherein the flow decision entity (FMF) is a separate entity in the core network (CN) or assigned to a mobility anchor (MA, MA1, MA2) providing mobility functionality.

13. The method according to one of the preceding claims, wherein the access networks (AN1, AN2, AN3, AN4) comprise one or more 3GPP access networks, particularly at least one UMTS access network and/or at least one GSM access network and/or at least one SAE/LTE access network.

14. The method according to one of the preceding claims, wherein the access networks (AN1, AN2, AN3, AN4) comprise one or more non 3GPP access networks, particularly at least one WLAN access network.

15. A method for transmitting data flows in a mobile telecommunications system in which a method according to one of the preceding claims is performed, wherein data flows which are transmitted via at least one network node to which a flow management entity (FMF) is assigned are forwarded according to the data flow filters established by the flow management entity (FMF).

16. A mobile telecommunications system having a plurality of network nodes, wherein a dataflow from and/or to a user device (UE) can be transmitted between a core network (CN) and the user device (UE) via different data links comprising links between the core network (CN) and one or more access networks (AN1, AN2, AN3, AN4) and/or links within one or more access networks (AN1, AN2, AN3, AN4), the system comprising:
- at least one flow management entity (FMF) assigned to a network node through which data flows are transmitted, the at least one flow management entity storing data flow information referring to rules (R) concerning the data links to be used for specific data flows;
- a flow decision entity (FDF) for verifying the data flow information stored in the at least one flow management entity (FMF) based on one or more policies (P) and for returning a verification result comprising confirmed and/or rejected rules (R) and/or confirmed and/or rejected modifications of rules (R) to the at least one flow management entity (FMF);
- wherein the at least one flow management entity (FMF) has means to establish data flow filters based on the verification result, said data flow filters determining the data link to be used for a data flow passing through the network node to which the at least one flow management entity (FMF) is assigned.

17. The mobile telecommunications system according to claim 16, wherein the system is adapted to perform a method according to one of claims 1 to 15.

## Patentansprüche

1. Verfahren zum Verwalten von Datenströmen in einem Mobiltelekommunikationssystem mit mehreren Netzknoten, bei dem ein Datenstrom von und/ oder zu einer Benutzervorrichtung (UE) zwischen einem Kernnetz (CN) und der Benutzervorrichtung (UE) über verschiedene Datenlinks übertragen werden kann, zu denen Links zwischen dem Kernnetz (CN) und einem oder mehreren Zugangsnetzen (AN1, AN2, AN3, AN4) und/ oder Links innerhalb eines oder mehrerer Zugangsnetze (AN1, AN2, AN3, AN4) gehören, wobei das Verfahren folgende Schritte umfasst:
- in mindestens einer Datenstromverwaltungseinheit (FMF), die einem Netzknoten zugeordnet ist, über den Datenströme übertragen werden, werden Datenstrominformationen zu Regeln (R) bezüglich der für bestimmte Datenströme zu benutzenden Datenlinks bereitgestellt
- die Datenstrominformationen werden von einer Datenstromentscheidungseinheit (FDF) anhand einer oder mehrerer Richtlinien (P) verifiziert, woraufhin ein Verifizierungsergebnis, das bestätigte und/ oder abgelehnte Regeln (R) und/ oder bestätigte und/ oder abgelehnte Modifizierungen von Regeln (R) umfasst, an die mindestens eine Datenstromverwaltungseinheit (FMF) zurückgesendet wird,
- auf der Grundlage des Verifizierungsergebnisses werden von der mindestens einen Datenstromverwaltungseinheit (FMF) Datenstromfilter eingerichtet, die den Datenlink festlegen, der für einen Datenstrom verwendet werden soll, welcher durch den Netzknoten fließt, dem die mindestens eine Datenstromverwaltungseinheit (FMF) zugeordnet ist.

2. Verfahren nach Anspruch 1, bei dem die mindestens eine Datenstromverwaltungseinheit (FMF) und die Datenstromentscheidungseinheit (FDF) über eine vorgegebene Schnittstelle (F1) kommunizieren.

3. Verfahren nach Anspruch 1 oder 2, bei dem die mindestens eine Datenstromverwaltungseinheit (FMF) Anforderungen zum Hinzufügen und/ oder Modifizieren und/ oder Löschen von Regeln (R) auf der Grundlage der Datenstrominformationen zur Datenstromentscheidungseinheit (FDF) überträgt, woraufhin die Datenstromentscheidungseinheit (FDF) diese Anforderungen verifiziert und Bestätigungen und/ oder Ablehnungen bezüglich dieser Anforderungen zu der mindestens einen Datenstromverwaltungseinheit (FMF) zurücksendet.

4. Verfahren nach einem der vorhergehenden Ansprüche, bei dem zum Einrichten eines Datenstromfilters für einen zu übermittelnden Datenstrom Standardregeln verwendet werden, falls für diesen Datenstrom keine anderen Regeln gelten.

5. Verfahren nach einem der vorhergehenden Ansprüche, bei dem die Regeln (R) von der Verfügbarkeit und/ oder der Auslastung der Zugangsnetze (AN1, AN2, AN3, AN4) und/ oder von den Datenübertragungsgebühren oder -geschwindigkeiten der Zugangsnetze (AN1, AN2, AN3, AN4) abhängig sind.

6. Verfahren nach einem der vorhergehenden Ansprüche, bei dem die Regeln (R) vom Inhalt des zu übertragenden Datenstroms abhängig sind, insbesondere davon, ob in dem Datenstrom Sprachdaten und/ oder Videodaten und/ oder Multimediadaten übertragen werden.

7. Verfahren nach einem der vorhergehenden Ansprüche, bei dem die Regeln (R) Anweisungen enthalten, einen Datenstrom über ein anderes Zugangsnetz (AN1, AN2, AN3, AN4) umzuleiten, wenn vorgegebene Bedingungen bestehen.

8. Verfahren nach einem der vorhergehenden Ansprüche, bei dem die Richtlinien (P) in der Datenstromentscheidungseinheit (FDF) von mindestens einem Dienstanbieter, insbesondere einem Mobilfunkzugangsnetzwerkanbieter und/ oder mindestens einem Mobilfunknetzanbieter und/ oder mindestens einem Benutzer einer Benutzervorrichtung (UE), zur Verfügung gestellt werden.

9. Verfahren nach einem der vorhergehenden Ansprüche, bei dem die Datenstrominformationen in der mindestens einen Datenstromverwaltungseinheit (FMF) von dem mindestens einen Dienstanbieter, insbesondere einem Mobilfunkzugangsnetzwerkanbieter und/ oder mindestens einer Netzeinheit und/ oder mindestens einem Mobilfunknetzanbieter und/ oder mindestens einem Benutzer einer Benutzervorrichtung (UE), zur Verfügung gestellt werden.

10. Verfahren nach einem der vorhergehenden Ansprüche, das unter Verwendung mindestens einer Datenstromentscheidungseinheit (FDF) ausgeführt wird, die sich vorzugsweise im Kernnetz (CN) befindet und mit einer oder mehreren Datenstromverwaltungseinheiten (FMF) kommuniziert.

11. Verfahren nach einem der vorhergehenden Ansprüche, bei dem die mindestens eine Datenstromverwaltungseinheit (FMF) einer Mobilitätsverankerung (MA, MA1, MA2) zugeordnet ist, die Mobilitätsfunktionalität bereitstellt, und/ oder einem Netzübergang (AG1, AG2, AG3, AG4) eines Zugangsnetzes (AN1, AN2, AN3, AN4), der Zugang zum Kernnetz (CN) gewährt.

12. Verfahren nach einem der vorhergehenden Ansprüche, bei dem die Datenstromentscheidungseinheit (FDF) eine separate Einheit in dem Kernnetz (CN) oder einer Mobilitätsverankerung (MA, MA1, MA2) zugeordnet ist, die Mobilitätsfunktionalität bereitstellt.

13. Verfahren nach einem der vorhergehenden Ansprüche, bei dem die Zugangsnetze (AN1, AN2, AN3, AN4) ein oder mehrere 3GPP-Zugangsnetze umfassen, insbesondere mindestens ein UMTS-Zugangsnetz und/ oder mindestens ein GSM-Zugangsnetz und/ oder mindestens ein SAE/LTE-Zugangsnetz.

14. Verfahren nach einem der vorhergehenden Ansprüche, bei dem die Zugangsnetze (AN1, AN2, AN3, AN4) ein oder mehrere Nicht-3GPP-Zugangsnetze umfassen, insbesondere mindestens ein WLAN-Zugangsnetz.

15. Verfahren zum Übertragen von Datenströmen in einem Mobiltelekommunikationssystem, in dem ein Verfahren nach einem der vorhergehenden Ansprüche ausgeführt wird, wobei Datenströme, die über mindestens einen Netzknoten übertragen werden, dem eine Datenstromverwaltungseinheit (FMF) zugeordnet ist, den von der Datenstromverwaltungseinheit (FMF) eingerichteten Datenstromfiltern entsprechend weitergeleitet werden.

16. Mobiltelekommunikationssystem mit mehreren Netzknoten, bei dem ein Datenstrom von und/ oder zu einer Benutzervorrichtung (UE) zwischen einem Kernnetz (CN) und der Benutzervorrichtung (UE) über verschiedene Datenlinks übertragen werden kann, zu denen Links zwischen dem Kernnetz (CN) und einem oder mehreren Zugangsnetzen (AN1, AN2, AN3, AN4) und/ oder Links innerhalb eines oder mehrerer Zugangsnetze (AN1, AN2, AN3, AN4) gehören, wobei das System Folgendes umfasst:
- mindestens eine Datenstromverwaltungseinheit (FMF), die einem Netzknoten zugeordnet ist, über den Datenströme übertragen werden, wobei die mindestens eine Datenstromverwaltungseinheit Datenstrominformationen zu Regeln (R) bezüglich der für bestimmte Datenströme zu benutzenden Datenlinks speichert,
- eine Datenstromentscheidungseinheit (FDF) zum Verifizieren der in der mindestens einen Datenstromverwaltungseinheit (FMF) gespeicherten Datenstrominformationen anhand einer oder mehrerer Richtlinien (P) und zum Zurücksenden eines Verifizierungsergebnisses, das bestätigte und/ oder abgelehnte Regeln (R) und/ oder bestätigte und/ oder abgelehnte Modifizierungen von Regeln (R) umfasst, an die mindestens eine Datenstromverwaltungseinheit (FMF),
- wobei die mindestens eine Datenstromverwaltungseinheit (FMF) Mittel zum Einrichten von Datenstromfiltern auf der Grundlage des Verifizierungsergebnisses aufweist, die den Datenlink festlegen, der für einen Datenstrom verwendet werden soll, welcher durch den Netzknoten fließt, dem die mindestens eine Datenstromverwaltungseinheit (FMF) zugeordnet ist.

17. Mobiltelekommunikationssystem nach Anspruch 16, wobei das System so ausgelegt ist, dass es ein Verfahren nach einem der Ansprüche 1 bis 15 ausführt.

## Revendications

1. Procédé de gestion de flux de données dans un système de télécommunications mobiles ayant une pluralité de noeuds de réseau, dans lequel un flux de données d'un et/ou vers un dispositif d'utilisateur (UE) peut être transmis entre un réseau de coeur (CN) et le dispositif d'utilisateur (UE) par l'intermédiaire de différentes liaisons de données comprenant des liaisons entre le réseau de coeur (CN) et un ou plusieurs réseaux d'accès (AN1, AN2, AN3, AN4) et/ou des liaisons au sein d'un ou plusieurs réseaux d'accès (AN1, AN2, AN3, AN4), le procédé comprenant les étapes suivantes :
- une information de flux de données faisant référence à des règles (R) concernant les liaisons de données destinées à être utilisées pour des flux de données spécifiques est délivrée dans au moins une entité de gestion de flux (FMF) attribuée à un noeud de réseau par l'intermédiaire duquel des flux de données sont transmis ;
- l'information de flux de données est vérifiée par une entité de décision de flux (FDF) sur la base d'une ou plusieurs politiques (P), ce après quoi un résultat de vérification comprenant des règles (R) confirmées et/ou rejetées et/ou des modifications de règles (R) confirmées et/ou rejetées est renvoyé à l'au moins une entité de gestion de flux (FMF) ;
- sur la base du résultat de vérification, des filtres de flux de données sont établis par l'au moins une entité de gestion de flux (FMF), lesdits filtres de flux de données déterminant la liaison de données devant être utilisée pour un flux de données passant par le noeud de réseau auquel l'au moins une entité de gestion de flux (FMF) est attribuée.

2. Procédé selon la revendication 1, dans lequel l'au moins une entité de gestion de flux (FMF) et l'entité de décision de flux (FDF) communiquent par l'intermédiaire d'une interface (F1) prédéfinie.

3. Procédé selon la revendication 1 ou 2, dans lequel l'au moins une entité de gestion de flux (FMF) transmet des demandes d'ajout et/ou de modification et/ou de suppression de règles (R) sur la base de l'information de flux de données à l'entité de décision de flux (FDF), ce après quoi l'entité de décision de flux (FDF) vérifie ces demandes et renvoie des confirmations et/ou des refus pour ce qui concerne ces demandes à l'au moins une entité de gestion de flux (FMF).

4. Procédé selon l'une des revendications précédentes, dans lequel des règles par défaut sont utilisées pour établir un filtre de flux de données pour un flux de données devant être transmis dans le cas où aucune autre règle ne s'applique au flux de données.

5. Procédé selon l'une des revendications précédentes, dans lequel les règles (R) dépendent de la disponibilité et/ou de la charge des réseaux d'accès (AN1, AN2, AN3, AN4) et/ou des droits ou vitesses de transmission de données des réseaux d'accès (AN1, AN2, AN3, AN4).

6. Procédé selon l'une des revendications précédentes, dans lequel les règles (R) dépendent du contenu du flux de données devant être transmis, particulièrement si des données vocales et/ou des données vidéo et/ou des données multimédia sont transmises dans le flux de données.

7. Procédé selon l'une des revendications précédentes, dans lequel les règles (R) incluent des instructions pour rediriger un flux de données par l'intermédiaire d'un autre réseau d'accès (AN1, AN2, AN3, AN4) lorsque des conditions prédéterminées sont satisfaites.

8. Procédé selon l'une des revendications précédentes, dans lequel les politiques (P) sont délivrées dans l'entité de décision de flux (FDF) par au moins un fournisseur de services, particulièrement un fournisseur de réseau d'accès mobile et/ou au moins un opérateur de réseau mobile et/ou au moins un utilisateur d'un dispositif d'utilisateur (UE).

9. Procédé selon l'une des revendications précédentes, dans lequel l'information de flux de données est délivrée dans l'au moins une entité de gestion de flux (FMF) par au moins un fournisseur de services, particulièrement un fournisseur de réseau d'accès mobile et/ou au moins une entité de réseau et/ou au moins un opérateur de réseau mobile et/ou au moins un utilisateur d'un dispositif d'utilisateur (UE).

10. Procédé selon l'une des revendications précédentes, dans lequel le procédé est mis en oeuvre en utilisant au moins une entité de décision de flux (FDF) qui est préférablement située dans le réseau de coeur (CN) et communique avec une ou plusieurs entités de gestion de flux (FMF).

11. Procédé selon l'une des revendications précédentes, dans lequel l'au moins une entité de gestion de flux (FMF) est attribuée à une ancre de mobilité (MA, MA1, MA2) fournissant une fonctionnalité de mobilité et/ou à une passerelle (AG1, AG2, AG3, AG4) d'un réseau d'accès (AN1, AN2, AN3, AN4) fournissant un accès au réseau de coeur (CN).

12. Procédé selon l'une des revendications précédentes, dans lequel l'entité de décision de flux (FDF) est une entité séparée dans le réseau de coeur (CN) ou attribuée à une ancre de mobilité (MA, MA1, MA2) fournissant une fonctionnalité de mobilité.

13. Procédé selon l'une des revendications précédentes, dans lequel les réseaux d'accès (AN1, AN2, AN3, AN4) comprennent un ou plusieurs réseaux d'accès 3GPP, particulièrement au moins un réseau d'accès UMTS et/ou au moins un réseau d'accès GSM et/ou au moins un réseau d'accès SAE/LTE.

14. Procédé selon l'une des revendications précédentes, dans lequel les réseaux d'accès (AN1, AN2, AN3, AN4) comprennent un ou plusieurs réseaux d'accès non 3GPP, particulièrement au moins un réseau d'accès WLAN.

15. Procédé de transmission de flux de données dans un système de télécommunications mobiles dans lequel un procédé selon l'une des revendications précédentes est mis en oeuvre, dans lequel des flux de données qui sont transmis par l'intermédiaire d'au moins un noeud de réseau auquel une entité de gestion de flux (FMF) est attribuée sont envoyés en fonction des filtres de flux de données établis par l'entité de gestion de flux (FMF).

16. Système de télécommunications mobiles ayant une pluralité de noeuds de réseau, dans lequel un flux de données d'un et/ou vers un dispositif d'utilisateur (UE) peut être transmis entre un réseau de coeur (CN) et le dispositif d'utilisateur (UE) par l'intermédiaire de différentes liaisons de données comprenant des liaisons entre le réseau de coeur (CN) et un ou plusieurs réseaux d'accès (AN1, AN2, AN3, AN4) et/ou des liaisons au sein d'un ou plusieurs réseaux d'accès (AN1, AN2, AN3, AN4), le système comprenant :
- au moins une entité de gestion de flux (FMF) attribuée à un noeud de réseau par l'intermédiaire duquel des flux de données sont transmis, l'au moins une entité de gestion de flux stockant une information de flux de données faisant référence à des règles (R) concernant les liaisons de données destinées à être utilisées pour des flux de données spécifiques ;
- une entité de décision de flux (FDF) pour vérifier l'information de flux de données stockée dans l'au moins une entité de gestion de flux (FMF) sur la base d'une ou plusieurs politiques (P) et pour renvoyer un résultat de vérification comprenant des règles (R) confirmées et/ou rejetées et/ou des modifications de règles (R) confirmées et/ou rejetées à l'au moins une entité de gestion de flux (FMF) ;
- dans lequel l'au moins une entité de gestion de flux (FMF) a un moyen pour établir des filtres de flux de données sur la base du résultat de la vérification, lesdits filtres de flux de données déterminant la liaison de données devant être utilisée pour un flux de données passant par le noeud de réseau auquel l'au moins une entité de gestion de flux (FMF) est attribuée.

17. Système de télécommunications mobiles selon la revendication 16, dans lequel le système est adapté à mettre en oeuvre un procédé selon l'une des revendications 1 à 15.
